# EUROPEAN PATENT SPECIFICATION

(11) **EP 4 509 727 B1**
(45) Date of publication and mention of the grant of the patent: **30.09.2026**
(21) Application number: 23191484.7
(22) Date of filing: 15.08.2023
(51) Int. Cl.: F16B 7/18, F16B 9/00, B64C 1/06, B64D 11/00

(54) **FASTENING DEVICE, FIXING SYSTEM, AIRCRAFT AND ASSEMBLY PROCESS FOR COMPENSATING TOLERANCES**
BEFESTIGUNGSVORRICHTUNG, BEFESTIGUNGSSYSTEM, FLUGZEUG UND ZUSAMMENBAUPROZESS ZUM TOLERANZAUSGLEICH
DISPOSITIF DE FIXATION, SYSTÈME DE FIXATION, AÉRONEF ET PROCÉDÉ DE MONTAGE POUR COMPENSER LES TOLÉRANCES

(43) Date of publication of application: 19.02.2025
(73) Proprietor: Airbus Operations GmbH, 21129 Hamburg (DE)
(72) Inventor: Petersen, Lauritz, Hamburg (DE); Benthien, Hermann, Hamburg (DE)
(74) Representative: Isarpatent

(56) References cited:
- US-A- 4 958 603
- US-A1- 2004 216 284
- US-A1- 2019 193 871

## Description

The invention relates to a fastening device for compensating tolerances when fastening a component to a support structure of a means of transport, in particular when fastening a cabin fitting element to a frame of an aircraft. The invention is furthermore concerned with a fastening system containing such a fastening device. Further, the invention relates to an aircraft and an assembly method for compensating tolerances when fastening a cabin fitting element to a frame of an aircraft.

Modern vehicles such as aircraft and spacecraft are manufactured in sections, that are pre-assembled. For attaching further components to those sections attachment systems are needed. Especially in the field of aircraft and spacecraft a high precision in manufacturing is important.

Further, the interior lining of aircraft is generally composed of individual elements, in which substantially plates or panels are placed adjacent to each other in a given framework or support structure. These plates or panels serve for example as cabin fitting elements.

Nevertheless, each section and component or plate/panel of the aircraft has different manufacturing tolerances, which are to match during assembly processes. For example, document US 4 958 603 A describes a brace for accepting attachment elements that can be connected to such components and can be braced between the head of the attachment element and the attached component unit.

Aspects of the invention may provide solutions for an adjustable and universal fastening device and system for assembling a customized interior component to the primary structure.

According to the invention, this problem is solved in each case by the subject matters of the independent claims.

According to a first aspect of the invention, a fastening device for compensating tolerances when fastening a component to a support structure of a means of transport is provided, with the features of claim 1. In particular, a fastening device for compensating tolerances when fastening a cabin fitting element to a frame of an aircraft is provided. The fastening device comprises a first end portion with an at least partly spherical shaped bearing shell, which has a recess for positively locking the first end portion to a support structure, and a second end portion with an at least partly spherical shaped bearing shell, which has a recess for positively locking the second end portion to a component. The at least partly spherical shaped bearing shells have a continuous thickness. Further the fastening device comprises a rod body for load bearing, which extends between and couples the first end portion and the second end portion. The first end portion and the second end portion are configured to compensate tolerances by a coordinated rotation of both at least partly spherical shaped bearing shells about their sphere center point.

According to a second aspect of the invention, a fastening system for compensating tolerances when fastening a component to a support structure of a means of transport with the features of claim 6 is provided.

According to a third aspect of the invention, an aircraft is provided. The aircraft comprises a cabin fitting element, in particular an overhead compartment, which is fixed to a frame of the aircraft by means of a fastening system according to the second aspect of the invention.

According to a fourth aspect of the invention, an assembly method for compensating tolerances when fastening a cabin fitting element to a frame of an aircraft with the features of claim 12 is provided.

A fundamental concept of the invention is to provide a continuous secondary structure interface or fastening system, respectively, with a nearby stepless tolerance compensation combined with a rotary attachment or at least partly spherical shaped bearing shells. Thereby compensating tolerances can be performed to an extent of the recesses, for example. Each recess can be formed and dimensioned such that a predetermined tolerance distance in a specific direction is provided. A typical hole for a bolt, a screw or a locking pin with a conventional oversize provides a small gap between the bolt and the hole that can be used for compensating tolerances. The fastening system can also be described as a frame independent rotary interface which creates a nearby stepless tolerance compensation on a short distance.

Each bearing partner, for example the first end portions and the at least partly spherical shaped bearing portion, of the fastening system is movable relative to each other bearing partner about a common center point on a spherical surface. In other words, the fastening device could be described as a sliding connector with rotary pans at its ends. Thus, mounting and aligning a customized component to the support structure can be simplified.

A particular advantage in the solution according to an aspect of the invention is that manufacturing efforts for assembling components, in particular cabin fitting elements, with the support structure is reduced. Hence, the present invention combines an inplane tolerance compensation of the manufacturing tolerances of the support structure, the fastening device and the component. Furthermore, the fastening system with the fastening device provides a smoother load introduction in weak and light components such as the hatrack structure of an aircraft.

Another advantage is that a smooth and continuous load introduction in the support structure or primary structure and/or a master - slave principle for the cabin adjustment can be provided. Further, a light and cheap tolerance compensation, in particular with a nearby stepless tolerance compensation on a short distance, can advantageously be provided by this invention. One further advantage can be reducing the weight of the fastening system compared to known solutions for compensating tolerances. Furthermore, a load transfer without parasitic moments can be provided. The fastening system can be applied without compromising on a crash load path of the support structure.

Advantageous embodiments and further developments emerge from the description with reference to the figures.

According to an embodiment of the fastening device according to the invention, the fastening device is manufactured by a press forming process, a casting process or a resin transfer molding process. Thus, a higher number of fastening devices can be manufactured in a given time.

Press forming, in particular hot press forming, is a forming technology where a pressing force is applied to a material to deform it, for instance by bending, stretching or similar techniques, to match the size and shape of the die, and the material then maintains that shape forever. Casting is a manufacturing process in which a liquid material is usually poured into a mold, which contains a hollow cavity of the desired shape, and then allowed to solidify. The solidified part is also known as a casting, which is ejected or broken out of the mold to complete the process.

Preferably, the fastening device is configured and/or manufactured as one piece.

According to another embodiment of the fastening device according to the invention, the at least partly spherical shaped bearing shell of the first end portion and the at least partly spherical shaped bearing shell of the second end portion substantially have the same orientation with regard to the rod body. Hence, the at least partly spherical shaped bearing shells both have an inner side being directed to the same orientation. The same applies to an outer side of the at least partly spherical shaped bearing shells.

Furthermore, the at least partly spherical shaped bearing shell of the first and second end portion can have the same size, the same width and/or the same thickness. In particular, the first end portion and the second end portion might be axisymmetric with regard to a transverse axis of the rod body. Big contact areas of the bearing shells and the bearing portion may reduce corrosion.

According to another embodiment of the fastening device according to the invention, the rod body has a curved or a waved cross-sectional shape for stiffening the fastening device. For example, the cross-sectional shape can substantially have the form of a U, V, W or similar forms with rounded transitions. Optionally, the fastening device can be made of a metal, a plastic or a compound of those. The metal includes aluminum, titanium, metal alloys or other light weight metals, for example. The plastic exemplarily includes fiber reinforced plastics.

According to another embodiment, the at least partly spherical shaped bearing shells have a continuous thickness. That means both the at least partly spherical shaped bearing shell of the first end portion and of the second end portion have a continuous thickness. Alternatively or additionally the at least partly spherical shaped bearing shells have a locally added material. The locally added material can be attached to the at least partly spherical shaped bearing shells by welding of an additional fiber material.

According to another embodiment of the fastening device according to the invention, the rod body substantially has a rectangular contour. As a result, a material transition between the rod body and the first and/or second end portion can be configured more smoothly. Therefore, a significantly change of the shape of the rod body when it passes into the at least partly spherical shaped bearing shell can be reduced. Optionally at least one of the first and second end portion has a coating.

Optionally, an axis of the recess of the first end portion and an axis of the recess of the second end portion cross each other and have an angle relative to each other in a range of about 75° to about 105°, in particular an angle of about 90°.

According to an embodiment of the fastening system according to the invention, at least a section of the joining element reaches through the recess of each first end portion of the first fastening device and of the second fastening device. The joining element can be configured as a locking pin, a bolt, a screw or a similar connector, for example. The joining element might further comprise a thread in its front area, wherein at least a section of the threaded front area reaches through the recess of each first end portion of the first fastening device and of the second fastening device. In particular, the thread in the front area of the joining element is configured as an outer thread. Therefore, coupling of other attachments, in particular a nut, is enabled on the opposite side of the bolt head in relation to the enclosure when mounting these other attachments by means of the threaded front area. The nut can be mounted on the threaded front area of the joining element such that the bolt head, the first end portions and the support structure are pressed together.

According to another embodiment of the fastening system according to the invention, the support structure is configured as a frame of an aircraft, and wherein the at least partly spherical shaped bearing portion is configured as a buckling reinforcement. Thus, aircraft components are well-tested and mostly standardized.

According to another embodiment the fastening system according to the invention further comprises a shock absorbing inlay for absorbing a mechanical load peak positioned between the bearing shells of each first end portion of the first and the second fastening device. For example, the shock absorbing inlay sectionwise forms a contact surface between an inner side of the bearing shell of the first end portion and an outer side of the bearing shell of the second end portion.

According to another embodiment the fastening system according to the invention further comprises a third fastening device according to the invention, wherein the bearing shell of the first end portion of the third fastening device is shaped complementary to the bearing shell of the first end portion of the second fastening device, and wherein the first end portion of the third fastening device is mounted to the at least partly spherical shaped bearing portion. That means that the bearing shell of the first end portion of the third fastening device has a mutually adapted shape.

Optionally, the second end portion of the first fastening device, the second fastening device and/or the third fastening device is mounted with a sliding element, which is shaped complementary to the bearing shell of the second end portion.

According to the invention, according to claim 12, the assembly method further comprises a step of providing a second fastening device according to the invention, wherein the second end portion is positively locked to the component; and wherein the first end portion is aligned together with the first end portion of the first fastening device in the step of aligning. Optionally a third fastening device can be provided, which might be aligned and fixed in the same manner as the second fastening device. However, the number of fastening devices, which can be included in the fastening system, is not limited to three, but can be more than three as well.

According to another embodiment of the assembly method according to the invention, the step aligning includes a coordinated rotation of both at least partly spherical shaped bearing shells of the first fastening device about their sphere center point. Further, the step aligning may include a sliding of the first fastening device relative to the support structure along a sliding rail of the component, while the second end portion is positively locked to the component. Thus, the sliding rail can be used as a holding element until the first and second end portions are frictionally locked, for example.

The present invention is explained more specifically below on the basis of the exemplary embodiments indicated in the schematic figures, in which:
- Fig. 1: shows a schematic illustration of a fastening device for compensating tolerances when fastening a component to a support structure of a means of transport according to an embodiment of the invention;
- Fig. 2: shows a schematic illustration in a cut view of a fastening system for compensating tolerances when fastening a component to a support structure of a means of transport according to an embodiment of the invention, wherein a situation before fixing the fastening system is illustrated;
- Fig. 3: shows a schematic illustration in a cut view of the fastening system according to Fig. 2, wherein a situation after fixing the fastening system is illustrated;
- Fig. 4: shows a schematic illustration in a side view of a fastening system for compensating tolerances when fastening a component to a support structure of a means of transport according to another embodiment of the invention, wherein Detail A-A shows a cross-section of a rod body;
- Fig. 5: shows a schematic illustration in a perspective view of a fastening system according to another embodiment of the invention;
- Fig. 6: shows a schematic illustration of an aircraft according to another embodiment of the invention with a fastening system for compensating tolerances when fastening a cabin fitting element to a frame of the aircraft;
- Fig. 7: shows a schematic block diagram of an assembly method for compensating tolerances when fastening a cabin fitting element to a frame of an aircraft according to the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

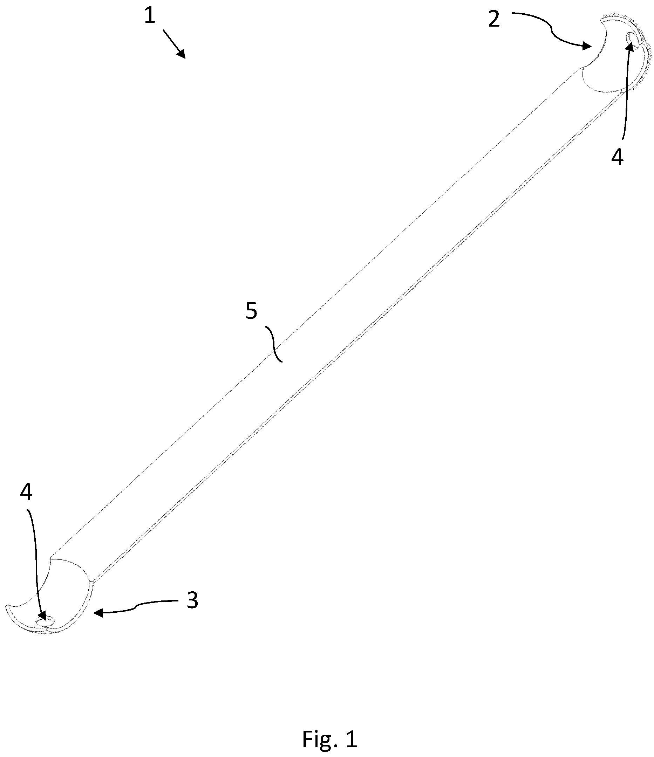

Fig. 1 shows a schematic illustration of a fastening device for compensating tolerances when fastening a component 101 to a support structure 11 of a means of transport according to an embodiment of the invention.

The fastening device 1 comprises a first end portion 2, a second end portion 3 and a rod body 5, which extends between and couples the first end portion 2 and the second end portion 3.

The first end portion 2 has an at least partly spherical shaped bearing shell, which has a recess 4 for positively locking the first end portion 2 to a support structure 11.

The second end portion 3 has an at least partly spherical shaped bearing shell, which also has a recess 4 for positively locking the second end portion 3 to a component 101.

The rod body 5 is configured for load bearing. The first end portion and the second end portion are configured to compensate tolerances by a coordinated rotation of both at least partly spherical shaped bearing shells 2, 3 about their sphere center point. That means compensating tolerances can be performed to an extent of the recesses 4, for example. Here, the recesses 4 are configured as holes, in particular as circular holes. Therefore, compensating tolerances can be performed in any radial direction of each hole 4 in this example.

Exemplarily, the at least partly spherical shaped bearing shell of the first end portion 2 and the at least partly spherical shaped bearing shell of the second end portion 3 have the same orientation with regard to the rod body 5. The at least partly spherical shaped bearing shells are configured as a pan, for example. The bearing shell or pan can have the same width as the rod body 5. Alternatively, the bearing shell or pan can have a greater or lower width than the rod body 5. The fastening device 1 is made of a metal for example. The metal can at least sectionwise be overmolded with a plastic. In particular, the first end portion 2 and the second end portion 3 could be overmolded with a fiber reinforced plastic. Locally added material can be attached to the at least partly spherical shaped bearing shells by welding of an additional fiber material.

Further, the at least partly spherical shaped bearing shells have a continuous thickness. The at least partly spherical shaped bearing shells have a continuous thickness when the basic metal is overmolded or locally added with a plastic, for example.

The rod body 5 can have a rectangular contour. For example, the rod body 5 is at least four times wider than thick. Optionally at least one of the first 2 and second end portion 3 has a coating. Here, the fastening device 1, in particular the first end portion 2, the second end portion 3 and the rod body 5, is configured as one piece.

For example, the fastening device 1 is manufactured by a press forming process, in particular a hot press forming process. In other words, the fastening device 1, as illustrated in Fig. 1, is a press formed fastening device 1 or a press formed rod body 1 with two integrated hipjoints 2, 3.

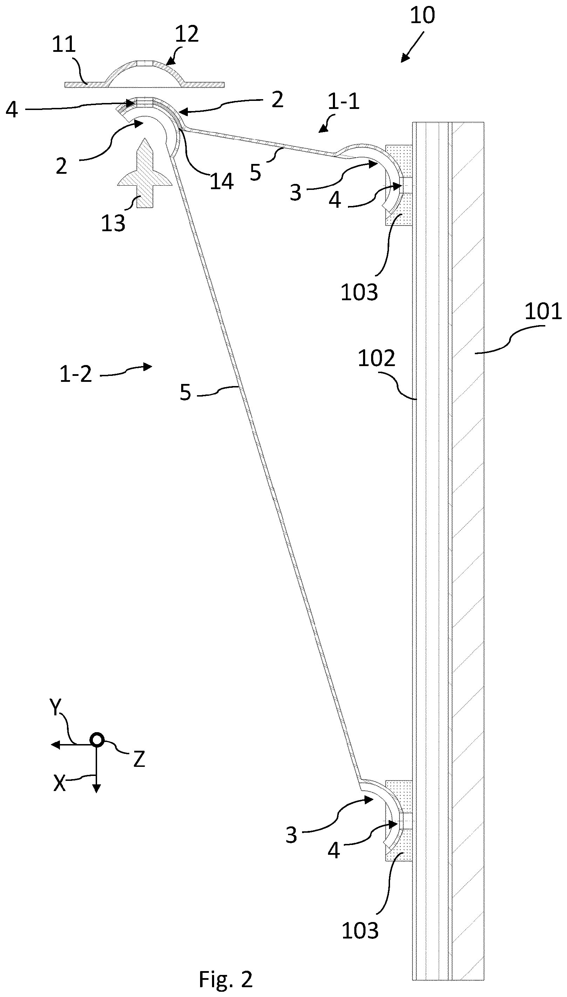

Fig. 2 shows a schematic illustration in a cut view of a fastening system 10 for compensating tolerances when fastening a component 101 to a support structure 11 of a means of transport according to an embodiment of the invention, wherein a situation before fixing the fastening system 10 is illustrated.

The fastening system 10 exemplarily comprises a first 1-1 and a second fastening device 1-2 according to the embodiment of Fig. 1 and further a support structure 11 as well as a joining element 13.

The support structure 11 comprises an at least partly spherical shaped bearing portion 12. The support structure 11 can have a recess, for example like the recess 4 of the first end portion 2. In Fig. 2, the bearing portion 12 is curved to an upper side of the support structure 11. The support structure 11 can be a fix point in the means of transport.

The bearing shell of the first end portion 2 of the first fastening device 1-1 is shaped complementary to the at least partly spherical shaped bearing portion 12. The first end portion 2 of the first fastening device 1-1 is mountable to the at least partly spherical shaped bearing portion 12. Here, the first end portion 2 of the first fastening device 1-1 is placed below the bearing portion 12.

The bearing shell of the first end portion 2 of the second fastening device 1-2 is shaped complementary to the bearing shell of the first end portion 2 of the first fastening device 1-1. The first end portion 2 of the second fastening device 1-2 is mountable to the at least partly spherical shaped bearing portion 12. Here, the first end portion 2 of the second fastening device 1-2 is placed below the first end portion 2 of the first fastening device 1-1.

Thus, the bearing portion 12 has a greater radius than the at least partly spherical shaped bearing shells of the first end portions 2. The at least partly spherical shaped bearing shell of the first end portion 2 of the second fastening device 1-2 has a smaller radius than the at least partly spherical shaped bearing shell of the first end portion 2 of the first fastening device 1-1 and than the bearing portion 12.

Optionally, a shock absorbing inlay 14 for absorbing a mechanical load peak is positioned between the bearing shells of each first end portion 2 of the first 1-1 and the second fastening device 1-2. The shock absorbing inlay 14 comprises a hole, for example like the hole 4, for receiving the joining element 13.

In the illustrated situation before fixing the fastening system 10, the component 101 can be aligned by sliding the first 1-1 and the second fastening device 1-2 along the X-direction and adjusting the first end portions 2 to match with the bearing portion 12. This can be done without compromising on the crash load path. Aligned components 101 lead to a pleasant impression when mounting a plurality of components 101 in a row.

Two sliding elements 103 can slide guidedly, wherein the sliding elements 103 are guided by a sliding rail 102. The sliding rail 102 extends along the X-direction, which corresponds to a travelling direction of the means of transport, for example.

In Fig. 2, the fastening system 10 is illustrated in an intermediate position, in which the second end portions 3 already engage or are positively locked with the sliding elements 103. The first end portions 2 are put together such that the rod bodies 5 and the sliding rail 102 substantially form a triangular.

The exemplary fastening system 10 provides a form fit rotary connection with a defined tolerance compensation capability.

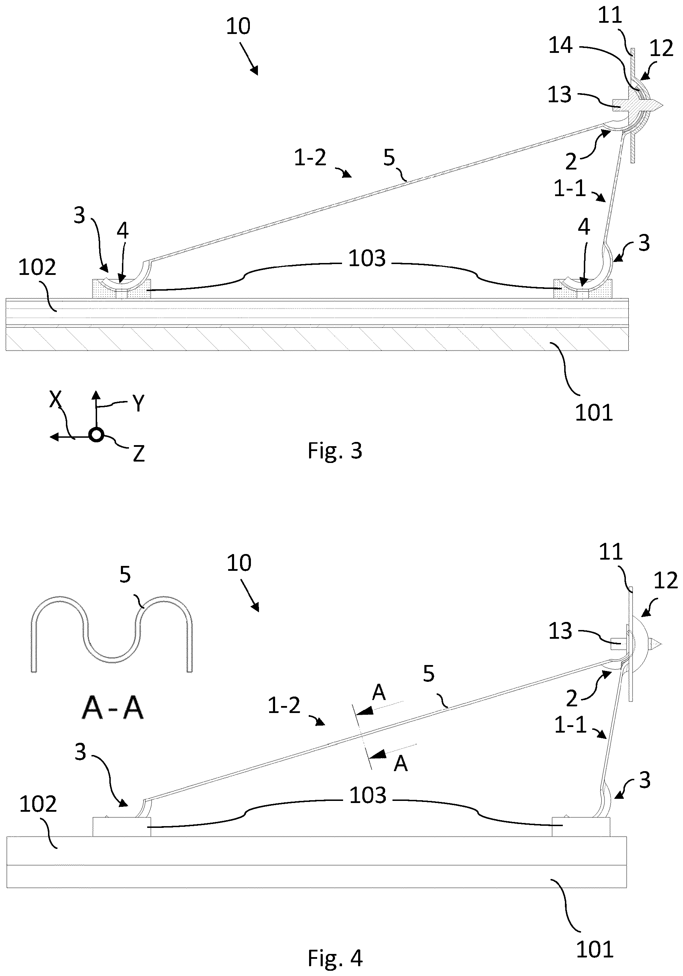

Fig. 3 shows a schematic illustration in a cut view of the fastening system 10 according to Fig. 2, wherein a situation after fixing the fastening system 10 is illustrated. Therefore, the fastening system in a fixed position is illustrated.

The joining element 13 frictionally and positively locks the first end portions 2 to the support structure 11 such that tolerances are compensable by a spherical relative movement of at least one of the first fastening device 1-1, the second fastening device 1-2 and the support structure 11 to each other.

The joining element 13 mounts the fastening device 1 to the support structure 11 by a frictionally- and positively-locking connection, as it is illustrated in Fig. 2. When in the locked position, the fastening system 1 can bear loads, which are charged on the component 101 in the X-direction and/or perpendicular to the X-direction, so in Y- and Z-direction (cf. the arrows in Fig. 2). To compensate inaccuracies the holes 4 of the fastening devices 1-1, 1-2 through which the joining element 13 passes, have a greater diameter than the shell surface of the joining element 13. Therefore, the fastening devices 1-1, 1-2 can move in relation to each other and in relation to the support structure 11 about a common sphere center point.

The joining element 13 has a bolt head, in particular a spherical shaped bolt head. In particular the joining element 13 is configured cylindrical to fit in the hole 4. The joining element 13 reaches at least a section through the recess 4 of each first end portion 2 of the first fastening device 1-1 and of the second fastening device 1-2. The joining element 13 can be configured as a screw. The joining element might further comprise a thread in its front area, wherein at least a section of the threaded front area reaches through the recess of each first end portion of the first fastening device and of the second fastening device. In particular, the thread in the front area of the joining element is configured as an outer thread. Therefore, coupling of other attachments, in particular a nut, is enabled on the opposite side of the bolt head in relation to the support structure 11 when mounting these other attachments by means of the threaded front area. The nut can be mounted on the threaded front area of the joining element 13 such that the bolt head, the first end portions 2 and the support structure 11 are pressed together.

Further, a locking screw, for example similar to the screw 13, can fix, in particular frictionally lock, the second end portion 3 to the sliding rail 102 and the component 101, respectively.

Fig. 4 shows a schematic illustration in a side view of a fastening system 10 for compensating tolerances when fastening a component 101 to a support structure 11 of a means of transport according to another embodiment of the invention, wherein Detail A-A shows a cross-section of a rod body 5.

The fastening system 10 in Fig. 4 distinguishes from the fastening system 10 of Fig. 2 and 3 in that the rod body 5 has a waved cross-sectional shape for stiffening the fastening device 1. In other words, with waved cross-sectional shape, the rod body 5 has an integrated stiffener.

Furthermore, the first end portions 2 and the second end portions 3 are configured as metal pans. Such sheet metal based fastening devices 1 allow the creation of light and cheap structural connectors.

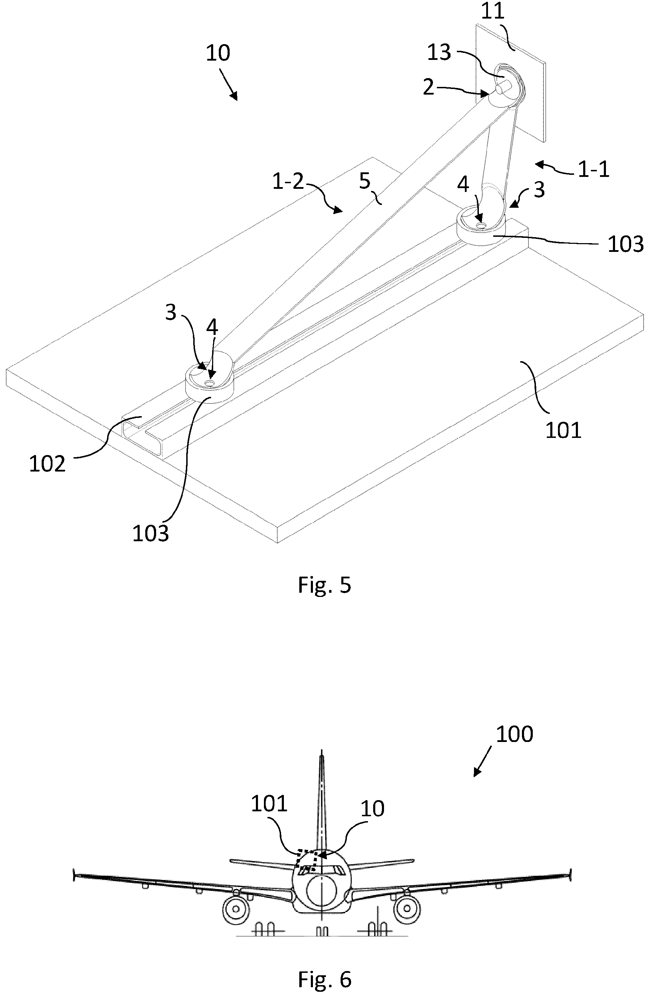

Fig. 5 shows a schematic illustration in a perspective view of a fastening system 10 according to another embodiment of the invention.

Exemplarily, the support structure 11 is configured as a frame of an aircraft 100. Furthermore, the at least partly spherical shaped bearing portion 12 is configured as a buckling reinforcement. As it is also shown in Fig. 5, the sliding rail 102 may be configured as a rectangular profile having a groove for the sliding elements 103.

Fig. 6 shows a schematic illustration of an aircraft 100 according to another embodiment of the invention with a fastening system 10 for compensating tolerances when fastening a cabin fitting element 101 to a frame 11 of the aircraft 100.

The frame 11 forms the fuselage, for example. Due to the adjustability in X- and Y-direction the cabin fitting element 101, for example an overhead storage compartment, can be aligned properly, which leads to a pleasant cabin impression. This can be applied without compromising on the crash load path of the frame 11.

The X-direction here corresponds to a flight direction of the aircraft 100.

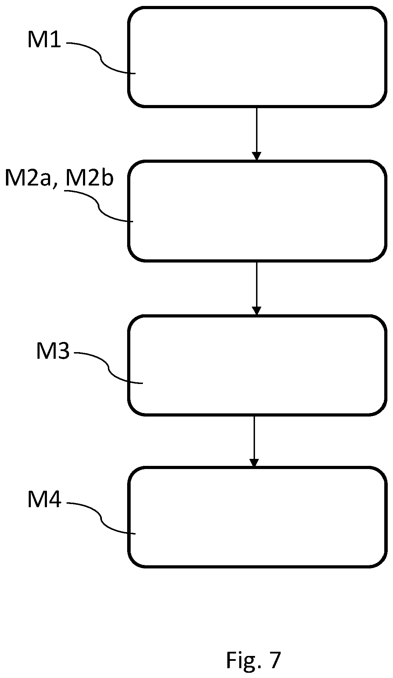

Fig. 7 shows a schematic block diagram of an assembly method according to the invention for compensating tolerances when fastening a cabin fitting element 101 to a frame 11 of an aircraft 100.

The assembly method comprises a step of positioning M1 the cabin fitting element 101 in relation to the frame 11 of the aircraft 100.

Moreover, the assembly method comprises a step of providing M2a a first fastening device 1-1, wherein the second end portion 3 is positively locked to the cabin fitting element 101. The first fastening device 1-1 can substantially be configured as the fastening device of Fig. 1-5. Further, the assembly method comprises a step of providing M2b a second fastening device 1-2, wherein the second end portion 3 is positively locked to the cabin fitting element 101. The second fastening device 1-2 can substantially be configured as the fastening device of Fig. 1-5.

The second end portions 3 or hip bodies of both fastening devices 1-1, 1-2 can be attached to a sliding element 103 in a sliding rail 102. Optionally, also three hip bodies 3 can be guided with a locking pin into structural interfaces.

Additionally, the assembly method comprises a step of aligning M3 the first end portion 2 of the first fastening device 1-1 to an at least partly spherical shaped bearing portion 12 of the frame 11 such that the first end portion 2 can be positively locked to the frame 11. Aligning M3 may include sliding of the fastening system 10 in the situation before fixing the fastening system 10. In particular, the first fastening device 1-1 can be slid relative to the frame along the sliding rail 102 of the cabin fitting element, while the second end portion 3 is positively locked to the cabin fitting element 101. Thus, the sliding rail 102 can be used as a fixation element until the first and second end portions are frictionally locked, for example. The first end portion 2 of the second fastening device 1-2 is thereby aligned together with the first end portion 2 of the first fastening device 1-1 in the step of aligning M3.

Furthermore, the step aligning M3 includes a coordinated rotation of both at least partly spherical shaped bearing shells 2, 3 of the first fastening device 1-1 about their sphere center point. Since the first end portion 2 and the second end portion 3 of each fastening device 1 is fixedly connected to the rod body 5, rotating the first or the second end portion leads to a corresponding rotation of the second or first end portion, respectively.

The assembly method further comprises a step of fixing M4 the first 2 and second end portions 3 after the step of aligning M3 such that the first 2 and second end portions 3 are frictionally locked. Thus, the first and second fastening device are fixed in position when the final position is reached. Final locking of the screws could be the last step, for instance.

In the detailed description above, various features have been combined in one or more examples in order to improve the rigorousness of the illustration. However, it should be clear in this case that the above description is of merely illustrative but in no way restrictive nature. It serves to cover all alternatives, modifications of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the various exemplary embodiments of the invention with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions may be apparent to one of ordinary skill in the art and can be made without departing from the scope of this disclosure. This disclosure is intended to cover any adaptations or variations of the exemplary embodiment(s) as long as they fall within the wording of the claims. In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order as long as these combinations fall within the wording of the claims and unless the disclosure or context suggests otherwise.

### Reference list

- 1: fastening device
- 2: first end portion
- 3: second end portion
- 4: recess
- 5: rod body

- 10: fastening system
- 11: support structure
- 12: bearing portion
- 13: joining element
- 14: shock absorbing inlay

- 100: aircraft
- 101: component
- 102: sliding rail
- 103: sliding element

- M1: positioning
- M2a, M2b: providing
- M3: aligning
- M4: fixing

## Claims

1. Fastening device (1) for compensating tolerances when fastening a component to a support structure of a means of transport, in particular when fastening a cabin fitting element to a frame of an aircraft, the fastening device (1) comprising:
a first end portion (2) with an at least partly spherical shaped bearing shell, which has a recess (4) for positively locking the first end portion (2) to a support structure;
a second end portion (3) with an at least partly spherical shaped bearing shell, which has a recess (4) for positively locking the second end portion (3) to a component, wherein the at least partly spherical shaped bearing shells (2, 3) have a continuous thickness; and
a rod body (5) for load bearing, which extends between and couples the first end portion (2) and the second end portion (3), wherein the first end portion and the second end portion are configured to compensate tolerances by a coordinated rotation of both at least partly spherical shaped bearing shells (2, 3) about their sphere center point.

2. Fastening device (1) according to claim 1, wherein the fastening device (1) is manufactured by a press forming process, a casting process or a resin transfer molding process.

3. Fastening device (1) according to claim 1 or 2, wherein the at least partly spherical shaped bearing shell of the first end portion (2) and the at least partly spherical shaped bearing shell of the second end portion (3) substantially have the same orientation with regard to the rod body (5).

4. Fastening device (1) according to one of the preceding claims, wherein the rod body has a curved or a waved cross-sectional shape for stiffening the fastening device.

5. Fastening device (1) according to one of the preceding claims, wherein the rod body (5) substantially has a rectangular contour.

6. Fastening system (10) for compensating tolerances when fastening a component (101) to a support structure (11) of a means of transport, in particular when fastening a cabin fitting element to a frame of an aircraft (100), comprising:
a support structure (11) having an at least partly spherical shaped bearing portion (12);
a first fastening device (1-1) comprising:
a first end portion (2) with an at least partly spherical shaped bearing shell, which has a recess (4) for positively locking the first end portion (2) to a support structure;
a second end portion (3) with an at least partly spherical shaped bearing shell, which has a recess (4) for positively locking the second end portion (3) to a component; and
a rod body (5) for load bearing, which extends between and couples the first end portion (2) and the second end portion (3), wherein the first end portion and the second end portion are configured to compensate tolerances by a coordinated rotation of both at least partly spherical shaped bearing shells (2, 3) about their sphere center point,
wherein the bearing shell of the first end portion (2) of the first fastening device (1-1) is shaped complementary to the at least partly spherical shaped bearing portion (12), and wherein the first end portion (2) of the first fastening device (1-1) is mountable to the at least partly spherical shaped bearing portion (12);
a second fastening device (1-2) comprising:
a first end portion (2) with an at least partly spherical shaped bearing shell, which has a recess (4) for positively locking the first end portion (2) to a support structure;
a second end portion (3) with an at least partly spherical shaped bearing shell, which has a recess (4) for positively locking the second end portion (3) to a component; and
a rod body (5) for load bearing, which extends between and couples the first end portion (2) and the second end portion (3), wherein the first end portion and the second end portion are configured to compensate tolerances by a coordinated rotation of both at least partly spherical shaped bearing shells (2, 3) about their sphere center point,
wherein the bearing shell of the first end portion (2) of the second fastening device (1-2) is shaped complementary to the bearing shell of the first end portion (2) of the first fastening device (1-1), and wherein the first end portion (2) of the second fastening device (1-2) is mountable to the at least partly spherical shaped bearing portion (12); and
a joining element (13), which frictionally and positively locks the first end portions (2) to the support structure (11) such that tolerances are compensable by a spherical relative movement of at least one of the first fastening device (1-1), the second fastening device (1-2) and the support structure (11) to each other.

7. Fastening system (10) according to claim 6, wherein at least a section of the joining element (13) reaches through the recess (4) of each first end portion (2) of the first fastening device (1-1) and of the second fastening device (1-2).

8. Fastening system (10) according to claim 6 or 7, wherein the support structure (11) is configured as a frame of an aircraft (100), and wherein the at least partly spherical shaped bearing portion (12) is configured as a buckling reinforcement.

9. Fastening system (10) according to one of the claims 6 to 8, further comprising a shock absorbing inlay (14) for absorbing a mechanical load peak positioned between the bearing shells of each first end portion (2) of the first (1-1) and the second fastening device (1-2).

10. Fastening system (10) according to one of the claims 6 to 9, further comprising a third fastening device according to one of the claims 1 to 5, wherein the bearing shell of the first end portion (2) of the third fastening device is shaped complementary to the bearing shell of the first end portion (2) of the second fastening device (1-2), and wherein the first end portion (2) of the third fastening device is mounted to the at least partly spherical shaped bearing portion (12).

11. Aircraft (100) comprising a cabin fitting element (101), in particular an overhead compartment, which is fixed to a frame (11) of the aircraft (100) by means of a fastening system (10) according to one of the claims 6 to 10.

12. Assembly method for compensating tolerances when fastening a cabin fitting element to a frame of an aircraft, comprising the steps of:
positioning (M1) a cabin fitting element (101) in relation to a frame (11) of an aircraft;
providing (M2a) a first fastening device (1-1) comprising:
a first end portion (2) with an at least partly spherical shaped bearing shell, which has a recess (4) for positively locking the first end portion (2) to the frame of the aircraft;
a second end portion (3) with an at least partly spherical shaped bearing shell, which has a recess (4) for positively locking the second end portion (3) to the cabin fitting element; and
a rod body (5) for load bearing, which extends between and couples the first end portion (2) and the second end portion (3), wherein the first end portion and the second end portion are configured to compensate tolerances by a coordinated rotation of both at least partly spherical shaped bearing shells (2, 3) about their sphere center point,
wherein the second end portion (3) is positively locked to the the cabin fitting element (101);
aligning (M3) the first end portion (2) of the first fastening device (1-1) to an at least partly spherical shaped bearing portion (12) of the frame (11) such that the first end portion (2) can be positively locked to the frame (11); and
fixing (M4) the first (2) and second end portions (3) after the step of aligning (M3) such that the first (2) and second end portions (3) are frictionally locked.

13. Assembly method according to claim 12, further comprising the step of providing (M2b) a second fastening device (1-2) according to one of the claims 1 to 5, wherein the second end portion (3) is positively locked to the cabin fitting element (101); and wherein the first end portion (2) is aligned together with the first end portion (2) of the first fastening device (1-1) in the step of aligning (M3).

14. Assembly method according to claim 12 or 13, wherein the step aligning (M3) includes a coordinated rotation of both at least partly spherical shaped bearing shells (2, 3) of the first fastening device (1-1) about their sphere center point.

## Patentansprüche

1. Befestigungsvorrichtung (1) zum Ausgleichen von Toleranzen beim Befestigen einer Komponente an einer Tragstruktur eines Transportmittels, insbesondere beim Befestigen eines Kabineneinrichtungselements an einem Rahmen eines Luftfahrzeugs, wobei die Befestigungsvorrichtung (1) umfasst:
einen ersten Endabschnitt (2) mit einer zumindest teilweise kugelförmigen Lagerschale, die eine Aussparung (4) zum formschlüssigen Verriegeln des ersten Endabschnitts (2) an einer Tragstruktur aufweist;
einen zweiten Endabschnitt (3) mit einer zumindest ateilweise kugelförmigen Lagerschale, die eine Aussparung (4) zum formschlüssigen Verriegeln des zweiten Endabschnitts (3) an einer Komponente aufweist, wobei die zumindest teilweise kugelförmigen Lagerschalen (2, 3) eine kontinuierliche Dicke aufweisen; und
einen Stabkörper (5) zur Lastaufnahme, der sich zwischen dem ersten Endabschnitt (2) und dem zweiten Endabschnitt (3) erstreckt und diese miteinander verbindet, wobei der erste Endabschnitt und der zweite Endabschnitt so ausgebildet sind, dass sie Toleranzen durch eine koordinierte Drehung der beiden zumindest teilweise kugelförmigen Lagerschalen (2, 3) um ihren Kugelmittelpunkt ausgleichen.

2. Befestigungsvorrichtung (1) nach Anspruch 1, wobei die Befestigungsvorrichtung (1) durch ein Pressformverfahren, ein Gussverfahren oder ein Harztransferformverfahren hergestellt ist.

3. Befestigungsvorrichtung (1) nach Anspruch 1 oder 2, wobei die zumindest teilweise kugelförmige Lagerschale des ersten Endabschnitts (2) und die zumindest teilweise kugelförmige Lagerschale des zweiten Endabschnitts (3) im Wesentlichen dieselbe Ausrichtung in Bezug auf den Stabkörper (5) aufweisen.

4. Befestigungsvorrichtung (1) nach einem der vorhergehenden Ansprüche, wobei der Stabkörper zur Versteifung der Befestigungsvorrichtung einen gekrümmten oder gewellten Querschnitt aufweist.

5. Befestigungsvorrichtung (1) nach einem der vorhergehenden Ansprüche, wobei der Stabkörper (5) im Wesentlichen eine rechteckige Kontur aufweist.

6. Befestigungssystem (10) zum Ausgleichen von Toleranzen beim Befestigen einer Komponente (101) an einer Tragstruktur (11) eines Transportmittels, insbesondere beim Befestigen eines Kabineneinrichtungselements an einem Rahmen eines Luftfahrzeugs (100), umfassend:
eine Tragstruktur (11) mit einem zumindest teilweise kugelförmigen Lagerabschnitt (12);
eine erste Befestigungsvorrichtung (1-1), umfassend:
einen ersten Endabschnitt (2) mit einer zumindest teilweise kugelförmigen Lagerschale, die eine Aussparung (4) zum formschlüssigen Verriegeln des ersten Endabschnitts (2) an einer Tragstruktur aufweist;
einen zweiten Endabschnitt (3) mit einer zumindest teilweise kugelförmigen Lagerschale, die eine Aussparung (4) zum formschlüssigen Verriegeln des zweiten Endabschnitts (3) an einer Komponente aufweist; und
einen Stabkörper (5) zur Lastaufnahme, der sich zwischen dem ersten Endabschnitt (2) und dem zweiten Endabschnitt (3) erstreckt und diese miteinander verbindet, wobei der erste Endabschnitt und der zweite Endabschnitt so ausgebildet sind, dass sie Toleranzen durch eine koordinierte Drehung der beiden zumindest teilweise kugelförmigen Lagerschalen (2, 3) um ihren Kugelmittelpunkt ausgleichen,
wobei die Lagerschale des ersten Endabschnitts (2) der ersten Befestigungsvorrichtung (1-1) komplementär zu dem zumindest teilweise kugelförmigen Lagerabschnitt (12) geformt ist und wobei der erste Endabschnitt (2) der ersten Befestigungsvorrichtung (1-1) an dem zumindest teilweise kugelförmigen Lagerabschnitt (12) anbringbar ist;
eine zweite Befestigungsvorrichtung (1-2), umfassend:
einen ersten Endabschnitt (2) mit einer zumindest teilweise kugelförmigen Lagerschale, die eine Aussparung (4) zum formschlüssigen Verriegeln des ersten Endabschnitts (2) an einer Tragstruktur aufweist;
einen zweiten Endabschnitt (3) mit einer zumindest teilweise kugelförmigen Lagerschale, die eine Aussparung (4) zum formschlüssigen Verriegeln des zweiten Endabschnitts (3) an einer Komponente aufweist; und
einen Stabkörper (5) zur Lastaufnahme, der sich zwischen dem ersten Endabschnitt (2) und dem zweiten Endabschnitt (3) erstreckt und diese miteinander verbindet, wobei der erste Endabschnitt und der zweite Endabschnitt so ausgebildet sind, dass sie Toleranzen durch eine koordinierte Drehung der beiden zumindest teilweise kugelförmigen Lagerschalen (2, 3) um ihren Kugelmittelpunkt ausgleichen,
wobei die Lagerschale des ersten Endabschnitts (2) der zweiten Befestigungsvorrichtung (1-2) komplementär zur Lagerschale des ersten Endabschnitts (2) der ersten Befestigungsvorrichtung (1-1) geformt ist und wobei der erste Endabschnitt (2) der zweiten Befestigungsvorrichtung (1-2) an dem zumindest teilweise kugelförmigen Lagerabschnitt (12) anbringbar ist; und
ein Verbindungselement (13), das die ersten Endabschnitte (2) reibschlüssig und formschlüssig an der Tragstruktur (11) verriegelt, sodass Toleranzen durch eine sphärische Relativbewegung der ersten Befestigungsvorrichtung (1-1) und/oder der zweiten Befestigungsvorrichtung (1-2) und/oder der Tragstruktur (11) zueinander ausgleichbar sind.

7. Befestigungssystem (10) nach Anspruch 6, wobei zumindest ein Abschnitt des Verbindungselements (13) durch die Aussparung (4) jedes ersten Endabschnitts (2) der ersten Befestigungsvorrichtung (1-1) und der zweiten Befestigungsvorrichtung (1-2) hindurchragt.

8. Befestigungssystem (10) nach Anspruch 6 oder 7, wobei die Tragstruktur (11) als Rahmen eines Luftfahrzeugs (100) ausgebildet ist und wobei der zumindest teilweise kugelförmige Lagerabschnitt (12) als Knickverstärkung ausgebildet ist.

9. Befestigungssystem (10) nach einem der Ansprüche 6 bis 8, ferner umfassend eine stoßdämpfende Einlage (14) zum Absorbieren einer mechanischen Lastspitze, die zwischen den Lagerschalen jedes ersten Endabschnitts (2) der ersten (1-1) und der zweiten Befestigungsvorrichtung (1-2) angeordnet ist.

10. Befestigungssystem (10) nach einem der Ansprüche 6 bis 9, ferner umfassend eine dritte Befestigungsvorrichtung nach einem der Ansprüche 1 bis 5, wobei die Lagerschale des ersten Endabschnitts (2) der dritten Befestigungsvorrichtung komplementär zur Lagerschale des ersten Endabschnitts (2) der zweiten Befestigungsvorrichtung (1-2) geformt ist und wobei der erste Endabschnitt (2) der dritten Befestigungsvorrichtung an dem zumindest teilweise kugelförmigen Lagerabschnitt (12) angebracht ist.

11. Luftfahrzeug (100), das ein Kabineneinrichtungselement (101), insbesondere ein Gepäckfach, umfasst, das mittels eines Befestigungssystems (10) nach einem der Ansprüche 6 bis 10 an einem Rahmen (11) des Luftfahrzeugs (100) befestigt ist.

12. Montageverfahren zum Ausgleichen von Toleranzen beim Befestigen eines Kabineneinrichtungselements an einem Rahmen eines Luftfahrzeugs, umfassend die folgenden Schritte:
Positionieren (M1) eines Kabineneinrichtungselements (101) in Bezug auf einen Rahmen (11) eines Luftfahrzeugs;
Bereitstellen (M2a) einer ersten Befestigungsvorrichtung (1-1), umfassend:
einen ersten Endabschnitt (2) mit einer zumindest teilweise kugelförmigen Lagerschale, die eine Aussparung (4) zum formschlüssigen Verriegeln des ersten Endabschnitts (2) an dem Rahmen des Luftfahrzeugs aufweist;
einen zweiten Endabschnitt (3) mit einer zumindest teilweise kugelförmigen Lagerschale, die eine Aussparung (4) zum formschlüssigen Verriegeln des zweiten Endabschnitts (3) an dem Kabineneinrichtungselement aufweist; und
einen Stabkörper (5) zur Lastaufnahme, der sich zwischen dem ersten Endabschnitt (2) und dem zweiten Endabschnitt (3) erstreckt und diese miteinander verbindet, wobei der erste Endabschnitt und der zweite Endabschnitt so ausgebildet sind, dass sie Toleranzen durch eine koordinierte Drehung der beiden zumindest teilweise kugelförmigen Lagerschalen (2, 3) um ihren Kugelmittelpunkt ausgleichen,
wobei der zweite Endabschnitt (3) formschlüssig an dem Kabineneinrichtungselement (101) verriegelt wird;
Ausrichten (M3) des ersten Endabschnitts (2) der ersten Befestigungsvorrichtung (1-1) an einem zumindest teilweise kugelförmigen Lagerabschnitt (12) des Rahmens (11), sodass der erste Endabschnitt (2) formschlüssig an dem Rahmen (11) verriegelt werden kann; und
Befestigen (M4) des ersten (2) und des zweiten Endabschnitts (3) nach dem Schritt des Ausrichtens (M3), sodass der erste (2) und der zweite Endabschnitt (3) reibschlüssig verriegelt werden.

13. Montageverfahren nach Anspruch 12, ferner umfassend den Schritt des Bereitstellens (M2b) einer zweiten Befestigungsvorrichtung (1-2) nach einem der Ansprüche 1 bis 5, wobei der zweite Endabschnitt (3) formschlüssig an dem Kabineneinrichtungselement (101) verriegelt wird; und wobei der erste Endabschnitt (2) im Schritt des Ausrichtens (M3) zusammen mit dem ersten Endabschnitt (2) der ersten Befestigungsvorrichtung (1-1) ausgerichtet wird.

14. Montageverfahren nach Anspruch 12 oder 13, wobei der Schritt des Ausrichtens (M3) eine koordinierte Drehung der beiden zumindest teilweise kugelförmigen Lagerschalen (2, 3) der ersten Befestigungsvorrichtung (1-1) um ihren Kugelmittelpunkt umfasst.

## Revendications

1. Dispositif de fixation (1) pour compenser les tolérances lors de la fixation d'un élément à une structure de support d'un moyen de transport, en particulier lors de la fixation d'un élément d'aménagement de cabine à un cadre d'un aéronef, le dispositif de fixation (1) comprenant :
une première partie d'extrémité (2) dotée d'une coquille de palier au moins partiellement sphérique, qui présente un évidement (4) pour verrouiller par forme la première partie d'extrémité (2) sur une structure de support ;
une seconde partie d'extrémité (3) dotée d'une coquille de palier au moins partiellement sphérique, qui présente un évidement (4) pour verrouiller par forme la seconde partie d'extrémité (3) sur un élément, les coquilles de palier (2, 3) au moins partiellement sphériques présentant une épaisseur continue ; et
un corps de tige (5) destiné à supporter une charge, qui s'étend entre la première partie d'extrémité (2) et la seconde partie d'extrémité (3) et les accouple, la première partie d'extrémité et la seconde partie d'extrémité étant conçues pour compenser les tolérances par une rotation coordonnée des deux coquilles de palier (2, 3) au moins partiellement sphériques autour du point central de leur sphère.

2. Dispositif de fixation (1) selon la revendication 1, le dispositif de fixation (1) étant fabriqué par un procédé de formage à la presse, un procédé de coulage ou un procédé de moulage par transfert de résine.

3. Dispositif de fixation (1) selon la revendication 1 ou 2, la coquille de palier au moins partiellement sphérique de la première partie d'extrémité (2) et la coquille de palier au moins partiellement sphérique de la seconde partie d'extrémité (3) ayant sensiblement la même orientation par rapport au corps de tige (5).

4. Dispositif de fixation (1) selon l'une quelconque des revendications précédentes, le corps de tige présentant une forme courbe ou ondulée en section transversale pour rigidifier le dispositif de fixation.

5. Dispositif de fixation (1) selon l'une quelconque des revendications précédentes, le corps de tige (5) présentant sensiblement un contour rectangulaire.

6. Système de fixation (10) pour compenser les tolérances lors de la fixation d'un élément (101) à une structure de support (11) d'un moyen de transport, en particulier lors de la fixation d'un élément d'aménagement de cabine à un cadre d'un aéronef (100), comprenant :
une structure de support (11) présentant une partie de palier (12) au moins partiellement sphérique ;
un premier dispositif de fixation (1-1) comprenant :
une première partie d'extrémité (2) dotée d'une coquille de palier au moins partiellement sphérique, qui présente un évidement (4) pour verrouiller par forme la première partie d'extrémité (2) sur une structure de support ;
une seconde partie d'extrémité (3) dotée d'une coquille de palier au moins partiellement sphérique, qui présente un évidement (4) pour verrouiller par forme la seconde partie d'extrémité (3) à un élément ; et
un corps de tige (5) destiné à supporter une charge, qui s'étend entre la première partie d'extrémité (2) et la seconde partie d'extrémité (3) et les accouple, la première partie d'extrémité et la seconde partie d'extrémité étant conçues pour compenser les tolérances par une rotation coordonnée des deux coquilles de palier (2, 3) au moins partiellement sphériques autour du point central de leur sphère,
la coquille de palier de la première partie d'extrémité (2) du premier dispositif de fixation (1-1) étant conformée de manière complémentaire à la partie de palier (12) au moins partiellement sphérique, et la première partie d'extrémité (2) du premier dispositif de fixation (1-1) pouvant être montée sur la partie de palier (12) au moins partiellement sphérique ;
un deuxième dispositif de fixation (1-2) comprenant :
une première partie d'extrémité (2) dotée d'une coquille de palier au moins partiellement sphérique, qui présente un évidement (4) pour verrouiller par forme la première partie d'extrémité (2) sur une structure de support ;
une seconde partie d'extrémité (3) dotée d'une coquille de palier au moins partiellement sphérique, qui présente un évidement (4) pour verrouiller par forme la seconde partie d'extrémité (3) à un élément ; et
un corps de tige (5) destiné à supporter une charge, qui s'étend entre la première partie d'extrémité (2) et la seconde partie d'extrémité (3) et les accouple, la première partie d'extrémité et la seconde partie d'extrémité étant conçues pour compenser les tolérances par une rotation coordonnée des deux coquilles de palier (2, 3) au moins partiellement sphériques autour du point central de leur sphère,
la coquille de palier de la première partie d'extrémité (2) du deuxième dispositif de fixation (1-2) étant conformée de manière complémentaire à la coquille de palier de la première partie d'extrémité (2) du premier dispositif de fixation (1-1), et la première partie d'extrémité (2) du deuxième dispositif de fixation (1-2) pouvant être montée sur la partie de palier (12) au moins partiellement sphérique ; et
un élément de liaison (13), qui verrouille par frottement et par forme les premières parties d'extrémité (2) sur la structure de support (11) de sorte que les tolérances puissent être compensées par un mouvement relatif sphérique d'au moins un parmi le premier dispositif de fixation (1-1), le deuxième dispositif de fixation (1-2) et la structure de support (11) l'un par rapport à l'autre.

7. Système de fixation (10) selon la revendication 6, au moins une section de l'élément de liaison (13) passant à travers l'évidement (4) de chaque première partie d'extrémité (2) du premier dispositif de fixation (1-1) et du deuxième dispositif de fixation (1-2).

8. Système de fixation (10) selon la revendication 6 ou 7, la structure de support (11) étant conçue comme un cadre d'un aéronef (100), et la partie de palier (12) au moins partiellement sphérique étant conçue comme un renfort contre le flambement.

9. Système de fixation (10) selon l'une des revendications 6 à 8, comprenant en outre un insert amortisseur (14) pour absorber un pic de charge mécanique positionné entre les coquilles de palier de chaque première partie d'extrémité (2) du premier (1-1) et du deuxième dispositif de fixation (1-2).

10. Système de fixation (10) selon l'une des revendications 6 à 9, comprenant en outre un troisième dispositif de fixation selon l'une des revendications 1 à 5, la coquille de palier de la première partie d'extrémité (2) du troisième dispositif de fixation étant conformée de manière complémentaire à la coquille de palier de la première partie d'extrémité (2) du deuxième dispositif de fixation (1-2), et la première partie d'extrémité (2) du troisième dispositif de fixation étant montée sur la partie de palier (12) au moins partiellement sphérique.

11. Aéronef (100) comprenant un élément d'aménagement de cabine (101), en particulier un compartiment en hauteur, qui est fixé à un cadre (11) de l'aéronef (100) au moyen d'un système de fixation (10) selon l'une des revendications 6 à 10.

12. Procédé d'assemblage pour compenser les tolérances lors de la fixation d'un élément d'aménagement de cabine à un cadre d'un aéronef, comprenant les étapes consistant à :
positionner (M1) un élément d'aménagement de cabine (101) par rapport à un cadre (11) d'un aéronef ;
fournir (M2a) un premier dispositif de fixation (1-1) comprenant :
une première partie d'extrémité (2) dotée d'une coquille de palier au moins partiellement sphérique, qui présente un évidement (4) pour verrouiller par forme la première partie d'extrémité (2) sur le cadre de l'aéronef ;
une seconde partie d'extrémité (3) dotée d'une coque de palier au moins partiellement sphérique, qui présente un évidement (4) pour verrouiller par forme la seconde partie d'extrémité (3) à l'élément d'aménagement de cabine ; et
un corps de tige (5) destiné à supporter une charge, qui s'étend entre la première partie d'extrémité (2) et la seconde partie d'extrémité (3) et les accouple, la première partie d'extrémité et la seconde partie d'extrémité étant conçues pour compenser les tolérances par une rotation coordonnée des deux coquilles de palier (2, 3) au moins partiellement sphériques autour du point central de leur sphère,
la seconde partie d'extrémité (3) étant verrouillée par forme à l'élément d'aménagement de cabine (101),
aligner (M3) la première partie d'extrémité (2) du premier dispositif de fixation (1-1) sur une partie de palier (12) au moins partiellement sphérique du cadre (11) de sorte que la première partie d'extrémité (2) puisse être verrouillée par forme avec le cadre (11) ; et
fixer (M4) les première (2) et seconde (3) parties d'extrémité après l'étape d'alignement (M3) de sorte que les première (2) et seconde (3) parties d'extrémité soient verrouillées par frottement.

13. Procédé d'assemblage selon la revendication 12, comprenant en outre l'étape consistant à fournir (M2b) un deuxième dispositif de fixation (1-2) selon l'une des revendications 1 à 5, la seconde partie d'extrémité (3) étant verrouillée par forme à l'élément d'aménagement de cabine (101) ; et la première partie d'extrémité (2) étant alignée avec la première partie d'extrémité (2) du premier dispositif de fixation (1-1) lors de l'étape d'alignement (M3).

14. Procédé d'assemblage selon la revendication 12 ou 13, l'étape d'alignement (M3) comprenant une rotation coordonnée des deux coquilles de palier (2, 3) au moins partiellement sphériques du premier dispositif de fixation (1-1) autour du point central de leur sphère.
